# EUROPÄISCHE PATENTSCHRIFT

(11) **EP 0 854 008 B1**
(45) Veröffentlichungstag und Bekanntmachung des Hinweises auf die Patenterteilung: **10.10.2001**
(21) Anmeldenummer: 97119029.3
(22) Anmeldetag: 31.10.1997
(51) Int. Cl.: B23Q 11/00

(54) **Halter für ein Werkzeug**
Holder for a tool
Porte-outil pour un outil

(30) Priorität: 17.01.1997 DE 19701606
(43) Veröffentlichungstag der Anmeldung: 22.07.1998
(73) Patentinhaber: CHIRON-WERKE GMBH & CO. KG, 78532 Tuttlingen (DE)
(72) Erfinder: Grund, Peter, Dr.-Ing., 78647 Trossingen (DE); Schweizer, Anton, Dipl.-Ing., 78573 Wurmlingen (DE)
(74) Vertreter: Otten, Hajo, Dr.-Ing.

(56) Entgegenhaltungen:
- EP-A- 0 298 239
- EP-A- 0 734 804
- EP-A- 0 808 687
- US-A- 4 708 040
- US-A- 4 726 269

## Beschreibung

Die vorliegende Erfindung betrifft einen Halter für ein Werkzeug, mit einer Längsachse, einem eine obere Öffnung sowie einen durch die Öffnung zugänglichen Innenraum aufweisenden Kegel-Hohlschaft zum Einspannen in eine Werkzeugaufnahme, einem sich an den Kegel-Hohlschaft anschließenden Bund und einem sich an den Bund anschließenden Halteschaft zur Aufnahme des Werkzeuges.

Derartige Halter sind aus dem Stand der Technik bekannt (siehe z.B. Werkzeughalter 3 der EP-A-0 298 239), sie werden als HSK-Werkzeughalter bezeichnet.

Diese Halter bestehen im wesentlichen aus drei Abschnitten, nämlich einmal dem Kegel-Hohlschaft, an den sich nach unten ein verdickter Bund anschließt, an dem bspw. Greifernuten für automatische Werkzeugwechselvorrichtungen vorgesehen sind. An diesen Bund schließt sich nach unten ein Halteschaft an, an dem unterschiedliche Werkzeuge befestigt werden können. Da einige dieser Werkzeuge im Betrieb durch Kühlmittel gekühlt werden müssen, ist in dem Inneren des Kegel-Hohlschaftes eine zentrische, abgestufte Gewindebohrung vorgesehen, in die ein Kühlmittelrohr eingeschraubt werden kann. Dieses Kühlmittelrohr weist einen zentralen Kühlmittelkanal auf, durch den von der Werkzeugmaschine kommendes Kühlmittel zu dem jeweiligen Werkzeug gelangt.

Derartige Halter oder HSK-Werkzeughalter sind genormt, sie können mit verschiedenen Werkzeugen bestückt und dann in eine Werkzeugaufnahme eingespannt werden, die in einer Spindel einer Werkzeugmaschine vorgesehen ist und eine zu dem Kegel-Hohlschaft komplementäre Öffnung aufweist.

Der Kegel-Hohlschaft ist mit einer oberen Öffnung versehen, durch die Zangensegmente und der Zugkegel eines Spannsystems in das Innere des Kegel-Hohlschaftes eingreifen können. Das Einspannen des Kegel-Hohlschaftes in die Aufnahme erfolgt derart, daß die Zangensegmente in ihrer Lösestellung zunächst nach innen geklappt sind und zusammen mit dem Zugkegel durch die Öffnung in den Kegel-Hohlschaft eingeschoben werden. Daraufhin wird der Zugkegel über seine Zugstange aus dem Kegel-Hohlschaft teilweise zurückgezogen, wobei er die Zangensegmente nach außen in ihre Spannstellung drückt, in der sie innen an dem Kegel-Hohlschaft anliegen und diesen drehfest mit der Spindel verspannen.

Vor dem Einspannen muß jedoch in einem Einkuppelprozeß dafür gesorgt werden, daß sich das Werkzeug, also der Werkzeughalter, in einer richtigen radialen Ausrichtung zu der Spindel befindet. Dieses Einkuppeln erfolgt, während sich die Spindel mit ihrer Kuppeldrehzahl dreht und eine Relativbewegung zu dem Werkzeughalter durchführt. Der Werkzeughalter ist während des Einkuppelns bereits in die Aufnahme eingeschoben, das Spannsystem wurde jedoch noch nicht betätigt. Zur Erzielung der radialen Zuordnung zwischen Halter und Spindel sind an der Spindel Nutensteine und an dem Halter bzw. dem Kegel-Hohlschaft entsprechende Vertiefungen vorgesehen, wobei die Nutensteine und die Vertiefungen so angeordnet und aneinander angepaßt sind, daß die Nutensteine nur in der vorgeschriebenen radialen Orientierung zwischen Spindel und Halter in die Vertiefungen eingreifen können. Sobald dieser Einkuppelvorgang abgeschlossen ist, dreht sich der Halter mit der Spindel mit und wird jetzt über das Spannsystem endgültig in die Werkzeugaufnahme eingezogen und verspannt.

Beim Einwechseln des Halters in die Werkzeugaufnahme gelangt das Kühlmittelrohr in eine in dem Zugkegel und in der Zugstange vorgesehene, zentrische Bohrung, durch die im Betrieb dann Kühlmittel zugeführt wird.

Derartige Halter sind zu mehreren in einem Werkzeugmagazin der Werkzeugmaschine gespeichert und werden durch eine Werkzeugwechselvorrichtung ausgewechselt. Während dieses Auswechselns gelangt häufig Kühlmittel in den Innenraum des Kegel-Hohlschaftes, das im Arbeitsraum der Werkzeugmaschine während der Bearbeitung von Werkstücken verspritzt wird. Während des Werkzeugwechsels tropft dieses Kühlmittel, das ggf. mit Spänen verunreinigt ist, von Teilen der Werkzeugmaschine ab und kann dabei wie gesagt in den Innenraum des Kegel-Hohlschaftes gelangen.

Das Kühlmittel sowie die Späne können das Einspannen des Halters beeinträchtigen, so daß Maßnahmen ergriffen werden, um den Eintritt in den Innenraum zu verhindern oder aber den Innenraum vor dem Einkuppeln auszublasen und so das Kühlmittel sowie die Späne nach oben durch die Öffnung herauszuschleudern.

Bei diesem Ausblasen geschieht es immer wieder, daß Späne und Kühlmittel auf die Ringfläche des Bundes gelangen, über die der Halter in Plananlage mit der Stirnfläche der Spindel gebracht wird, um für ein zentrisches Einspannen des Halters in die Spindel zu sorgen. Späne, die sich auf dieser Ringfläche befinden, wirken sich nachteilig auf die Plananlage aus und beeinträchtigen somit die zentrische Ausrichtung und damit den Rundlauf des Halters um die Drehachse der Spindel.

Auch beim Auswechseln eines gerade benutzten Halters kann Kühlmittel mit Spänen in den Innenraum gelangen. In der Magazinstellung, in der der Halter ggf. für längere Zeit verbleibt, kann das Kühlmittel dann eintrocknen, so daß die Späne z.B. an Innenseiten des Innenraumes festkleben. Derartige Späne können häufig durch Ausblasen nicht mehr entfernt werden, so daß sie sich nachteilig auf das Einspannen auswirken, da sie zwischen die Innenfläche des Kegel-Hohlschaftes sowie den Zugkegel des Spannsystems geraten können.

Auch dies kann sich nachteilig auf den Rundlauf des Werkzeuges auswirken.

Das Ausblasen des Innenraumes vor dem Einkuppeln kann also nicht sämtliche Probleme lösen, die mit dem Eintrag von Kühlmittel und Spänen in den Innenraum des Kegel-Hohlschaftes verbunden sind. Es wurden daher bereits Konstruktionen vorgeschlagen, bei denen die Öffnung des Kegel-Hohlschaftes so lange wie möglich verschlossen bleibt, um diesen Eintrag von Verschmutzungen zu verhindern. Dies bedeutet jedoch aufwendige weitere konstruktive Maßnahmen, die kostenintensiv sind und ferner das Gewicht entweder des Halters oder aber des Werkzeuggreifers erhöhen, was wegen der angestrebten schnellen Werkzeugwechselzeit unerwünscht ist.

Auch ein längeres Ausblasen, um für ein zuverlässigeres Entfernen von Kühlmittel und Spänen aus dem Innenraum zu sorgen, ist nicht erwünscht, da dies wegen der erforderlichen Zeit zu einer Erhöhung der Werkzeugwechselzeit führt, was ebenfalls vermieden werden soll.

Ein weiterer Nachteil bei dem bekannten Halter besteht darin, daß im Innenraum im dort sozusagen "gespeicherten" Kühlmittel Späne herumschwimmen, die in das Kühlmittelröhrchen gelangen und dieses verstopfen können. Dies ist insbesondere dann von Nachteil, wenn ein derartiges Verstopfen beim Auswechseln eines Halters geschieht, denn die Späne können dann in dem Kühlmittelröhrchen antrocknen und dieses nachhaltig verstopfen, was mit entsprechenden Funktionsbeeinträchtigungen bei der erneuten Verwendung des Halters bzw. des von ihm gehaltenen Werkzeuges einhergeht.

Vor diesem Hintergrund ist es Aufgabe der vorliegenden Erfindung, durch konstruktiv einfache Maßnahmen ein sicheres und schnelles Einspannen des Halters zu ermöglichen.

Bei dem eingangs erwähnten Halter wird diese Aufgabe erfindungsgemäß dadurch gelöst, daß zumindest eine Ablaufbohrung vorgesehen ist, die von dem Innenraum ausgehend nach außen verläuft und den Innenraum mit der Umgebung verbindet.

Die der Erfindung zugrunde liegende Aufgabe wird auf diese Weise vollkommen gelöst.

Die Erfinder der vorliegenden Anmeldung haben nämlich erkannt, daß überraschenderweise eine derart einfache konstruktive Änderung an dem Halter selbst die obengenannten Probleme vollkommen beseitigt. Schon eine einfache Ablaufbohrung reicht aus, um zu verhindern, daß beim Ausblasen des Innenraumes große Mengen an Kühlmittel und/oder Spänen nach oben herausfliegen. Das Kühlmittel sowie die Späne treten jetzt vielmehr durch die Ablaufbohrung nach außen aus, so daß eine Verschmutzung der Ringfläche des Bundes vollkommen vermieden werden kann. Darüber hinaus ist es je nach Lage der Bohrung unter Umständen nicht erforderlich, Kühlmittel und Späne aktiv aus dem Innenraum zu entfernen, bei geeigneter Ausrichtung der Ablaufbohrung kann das Kühlmittel auch von selbst aus dem Innenraum herauslaufen, so daß auch bei in einem Werkzeugmagazin gespeicherten Haltern sichergestellt ist, daß der Innenraum größtenteils von Kühlmittel und Spänen sozusagen automatisch befreit wird.

Überraschenderweise konnten die Erfinder feststellen, daß auch bei Haltern, deren Kegel-Hohlschaft mit einem Kühlmittelröhrchen bestückt ist, der verbleibende Platz im Innenraum ausreicht, um zumindest eine derartige Ablaufbohrung anzubringen, die zur Seite oder auch nach unten gerichtet sein kann.

Durch die erfindungsgemäß vorgesehene Ablaufbohrung ist es jetzt möglich, den Innenraum des Kegel-Hohlschaftes von Kühlmittel und Spänen freizuhalten, ohne daß konstruktiv aufwendige Abdeckungen verwendet werden müssen oder der Innenraum für eine längere Zeit ausgeblasen werden muß. Das bedeutet jedoch, daß zum einen ein sicheres Einkuppeln möglich ist, da Verschmutzungen der Ringfläche des Bundes bzw. der Innenfläche der Innenraumes entweder nicht erfolgen oder aber problemlos beseitigt werden können. Zum anderen ist auch ein schneller Werkzeugwechsel möglich, da nur noch ein kurzes Ausblasen erforderlich ist, um restliches Kühlmittel und verbleibende Späne zu entfernen.

In einer Weiterbildung ist es dann bevorzugt, wenn mehrere Ablaufbohrungen vorgesehen sind, die vorzugsweise symmetrisch zu der Längsachse angeordnet sind.

Die Erfinder haben erkannt, daß es möglich ist, mehrere Ablaufbohrungen vorzusehen, wodurch die Sicherheit erhöht wird, daß das Kühlmittel auch tatsächlich aus dem Innenraum abgeführt wird. Durch die symmetrische Anordnung der Ablaufbohrungen zur Längsachse wird eine Unwucht des Halters vermieden, so daß keine anderweitigen Maßnahmen vorgesehen werden müssen, um die Unwucht zu kompensieren, die bei einer einzigen Ablaufbohrung auftreten kann.

Dabei ist es weiter bevorzugt, wenn eine gerade Anzahl von Ablaufbohrungen, vorzugsweise zwei Ablaufbohrungen, vorgesehen ist.

Hier ist von Vorteil, daß sich die symmetrische Anordnung der Ablaufbohrungen insbesondere bei einer geraden Anzahl sehr einfach z.B. auf einem Teilapparat realisieren läßt, so daß auch bestehende Halter mit den Ablaufbohrungen nachgerüstet werden können. Wenn nur zwei Ablaufbohrungen vorgesehen sind, bedeutet dies lediglich das Setzen von zwei zueinander um 180° versetzten Bohrungen, was mit sehr geringem Aufwand möglich ist, so daß sich einerseits bestehende Halter schnell und problemlos nachrüsten lassen und andererseits der konstruktive Mehraufwand für neue Halter denkbar gering ist.

Weiter ist es bevorzugt, wenn die oder jede Ablaufbohrung von einem Boden des Innenraumes ausgehend schräg nach außen unter einem Winkel zu der Längsachse verläuft, der vorzugsweise kleiner als 45° ist und vorzugsweise ca. 30° beträgt.

Hier ist zum einen von Vorteil, daß das gesamte Kühlmittel aus dem Innenraum ablaufen kann, da die Ablaufbohrungen in dem Boden des Innenraumes angeordnet sind. Die Erfinder haben nämlich erkannt, daß selbst bei vorhandenem Kühlmittelröhrchen an dem Boden des Innenraumes noch genügend Platz verbleibt, um um das Kühlmittelröhrchen herum mehrere Ablaufbohrungen zu setzen. Durch die schräg nach außen und unten verlaufende Anordnung der Ablaufbohrungen wird außerdem dafür gesorgt, daß das zum Teil wegen der aufgenommenen Späne zähflüssige Kühlmittel dennoch problemlos ablaufen kann. Dies wird insbesondere durch einen Winkel von kleiner als 45°, vorzugsweise von 30°, zu der Längsachse erreicht, wodurch die Ablaufbohrung jeweils so steil ist, daß ein guter und schneller Ablauf erreicht wird. Insbesondere bei einer Steigung von 30° entleert sich der Innenraum von selbst, so daß keine Unterstützung durch Ausblasen erforderlich ist.

Weiter ist es bevorzugt, wenn die oder jede Ablaufbohrung einen größeren Durchmesser als ca. 5 mm aufweist.

Hier ist von Vorteil, daß eine lichte Weite für die Ablaufbohrungen gewählt wird, die groß verglichen mit der üblichen Größe von Spänen ist, so daß diese die Ablaufbohrungen nicht verstopfen können. Generell sollte der Durchmesser in Abhängigkeit von der Größe des Kegel-Hohlschaftes so groß wie möglich gewählt werden.

Insgesamt ist es bevorzugt, wenn die oder jede Ablaufbohrung in eine Außenfläche des Halteschaftes mündet, wobei die oder jede Ablaufbohrung vorzugsweise unmittelbar unterhalb des Bundes in der Außenfläche mündet.

Diese Maßnahme ist besonders vorteilhaft, weil zum einen der an dem Bund angreifende Wechsler durch ablaufendes Kühlmittel und sich ggf. an der Auslaßöffnung der jeweiligen Ablaufbohrung sammelnde Späne nicht beeinträchtigt wird. Ferner ist von Vorteil, daß das Kühlmittel sowie die Späne unterhalb der Ringfläche des Bundes abgeführt werden, so daß mit Sicherheit ein Verschmutzen dieser Ringfläche und damit eine Beeinträchtigung der Plananlage an der Spindel verhindert wird.

Späne, die ggf. außen an dem Halteschaft verkleben, stören bei dem weiteren Einsatz des Halters nicht, da der Arbeitsbereich des Werkzeuges ständig mit großen Mengen an Kühlmittel gespült wird, so daß sich auch verklebte Späne problemlos wieder ablösen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Seitenansicht des neuen Halters in einer Position kurz vor dem Einwechseln in eine Werkzeugaufnahme einer schematisch angedeuteten Werkzeugmaschine; und
- Fig. 2: einen ausschnittweisen Längsschnitt durch den neuen Halter aus Fig. 1.

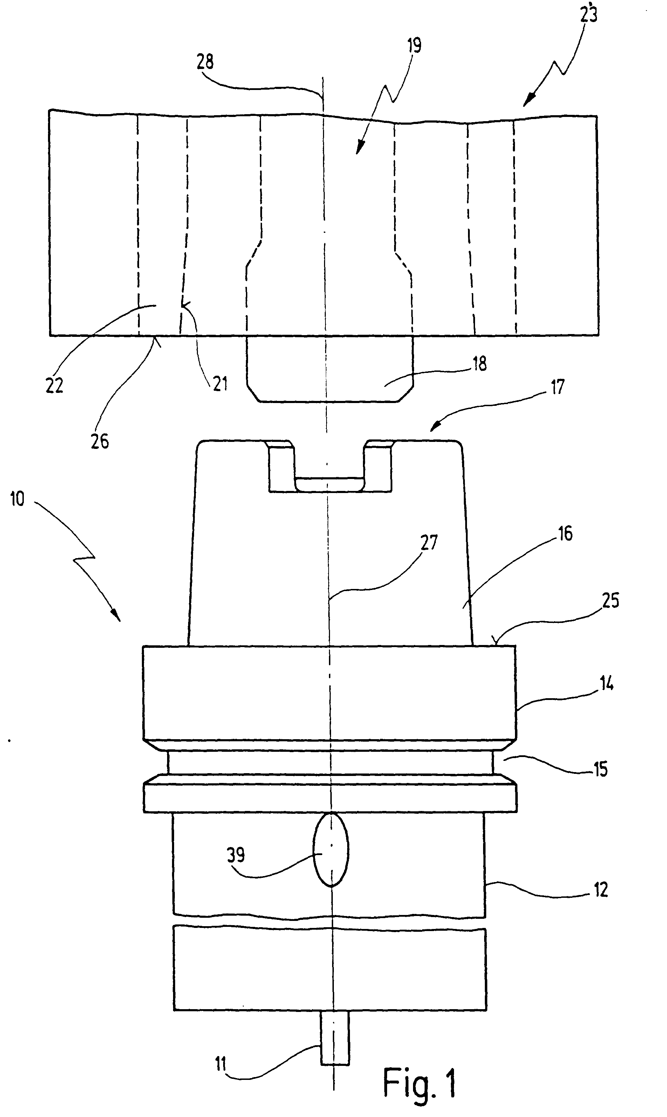

In Fig. 1 ist mit 10 ein Halter bezeichnet, der allgemein als HSK-Werkzeughalter bezeichnet wird. Der Halter 10 trägt ein bei 11 schematisch angedeutetes Werkzeug, das auf nicht näher dargestellte Weise an einem Halteschaft 12 des Halters 10 befestigt ist.

An den Halteschaft 12 schließt sich nach oben ein verdickter Bund 14 mit einer Greifernut 15 an. An dieser Greifernut 15 wird der Halter 10 von einem Greifer eines Werkzeugwechslers ergriffen und zwischen einer Magazinposition und einer Position an der Werkzeugmaschine transferiert.

An den Bund 14 schließt sich nach oben ein an sich bekannter Kegel-Hohlschaft 16 an, in dessen obere Öffnung 17 ein Zugkegel 18 eines Spannsystemes 19 eingreift, um den Halter 10 mit seinem Kegel-Hohlschaft 16 in eine Werkzeugaufnahme 21 einer Spindel 22 einer schematisch angedeuteten Werkzeugmaschine 23 einzuziehen und dort zu verspannen.

Die Werkzeugaufnahme 21 ist in bekannter Weise komplementär zur Form des Kegel-Hohlschaftes 16 ausgebildet. Bei dem Einkuppeln gelangt der Bund 14 mit seiner Ringfläche 25 in Anlage mit einer Stirnfläche 26 der Spindel 22, wobei durch die erreichte Plananlage für eine zentrische Ausrichtung des Halters 10 mit seiner Längsachse 27 zu einer bei 28 angedeuteten Drehachse der Spindel 22 gesorgt wird.

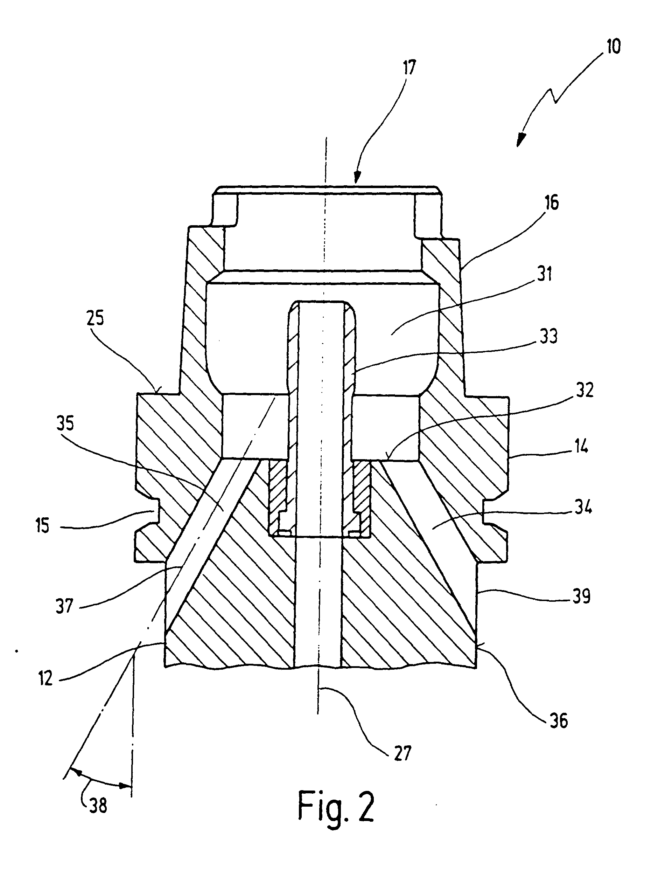

In Fig. 2 ist der Halter 10 aus Fig. 1 abschnittsweise im Längsschnitt dargestellt. Es ist zu erkennen, daß die obere Öffnung 17 in einen Innenraum 31 führt, an dessen Boden 32 in bekannter Weise ein Kühlmittelröhrchen 33 angeordnet ist. Dieses Kühlmittelröhrchen dient zur Versorgung des in Fig. 1 gezeigten Werkzeuges 11 mit Kühlmittel, was aber an sich bekannt ist.

Um das Kühlmittelröhrchen 33 herum verteilt sind in dem Boden 32 Ablaufbohrungen 34, 35 vorgesehen, die in einer Außenfläche 36 des Halteschaftes 12 unmittelbar unterhalb des Bundes 14 enden. Die Ablaufbohrungen 34, 35 sind symmetrisch zu der Längsachse 27 angeordnet und schließen über ihre jeweilige Mittelachse 37 mit der Längsachse 27 einen bei 38 angedeuteten Winkel ein, der ca. 30° beträgt.

Die beiden Ablaufbohrungen 34, 35 sind symmetrisch zu der Längsachse 27 angeordnet, d.h. zueinander um 180° versetzt. Sie weisen einen Durchmesser quer zu ihrer Mittelachse 37 von ca. 5 mm auf.

In dem Innenraum 31 vorhandenes Kühlmittel oder sich dort ansammelnde Späne gelangen automatisch durch die schräg nach unten und außen verlaufenden Ablaufbohrungen 34, 35 aus dem Innenraum 31 heraus, so daß ein Eintrag von Schmutz in das Kühlmittelröhrchen 33 sowie ein Ansammeln von antrocknenden Spänen im Innenraum 31 vermieden werden.

Weil die Ablaufbohrungen 34, 35 mit ihren Auslaßöffnungen 39 unterhalb der Greifernut 15 in der Außenfläche 36 münden, kann das abfließende Kühlmittel auch nicht auf die Ringfläche 25 gelangen, so daß eine Beeinträchtigung der Plananlage an der Spindel 22 ebenfalls vermieden wird.

## Patentansprüche

1. Halter für ein Werkzeug (11), mit einer Längsachse (27), einem eine obere Öffnung (17) sowie einen durch die Öffnung (17) zugänglichen Innenraum (31) aufweisenden Kegel-Hohlschaft (16) zum Einspannen in eine Werkzeugaufnahme (21), einem sich an den Kegel-Hohlschaft (16) anschließenden Bund (14) und einem sich an den Bund (14) anschließenden Halteschaft (12) zur Aufnahme des Werkzeuges (11),
**dadurch gekennzeichnet, daß** zumindest eine Ablaufbohrung (34, 35) vorgesehen ist, die von dem Innenraum (31) ausgehend nach außen verläuft und den Innenraum (31) mit der Umgebung verbindet.

2. Halter nach Anspruch 1, **dadurch gekennzeichnet, daß** mehrere Ablaufbohrungen (34, 35) vorgesehen sind.

3. Halter nach Anspruch 2, **dadurch gekennzeichnet, daß** die mehreren Ablaufbohrungen (34, 35) symmetrisch zu der Längsachse (27) angeordnet sind.

4. Halter nach Anspruch 2 oder 3, **dadurch gekennzeichnet, daß** eine gerade Anzahl von Ablaufbohrungen (34, 35), vorzugsweise zwei Ablaufbohrungen (34, 35), vorgesehen ist.

5. Halter nach einem der Ansprüche 1 bis 4, **dadurch gekennzeichnet, daß** die oder jede Ablaufbohrung (34, 35) von einem Boden (32) des Innenraumes (31) ausgehend schräg nach außen unter einem Winkel zu der Längsachse (27) verläuft, der vorzugsweise kleiner als 45° ist.

6. Halter nach Anspruch 5, **dadurch gekennzeichnet, daß** der Winkel ca. 30° beträgt.

7. Halter nach einem der Ansprüche 1 bis 6, **dadurch gekennzeichnet, daß** die oder jede Ablaufbohrung einen größeren Durchmesser als ca. 5 mm aufweist.

8. Halter nach einem der Ansprüche 1 bis 7, **dadurch gekennzeichnet, daß** die oder jede Ablaufbohrung in einer Außenfläche (36) des Halteschaftes (12) mündet.

9. Halter nach Anspruch 8, **dadurch gekennzeichnet, daß** die oder jede Ablaufbohrung unmittelbar unterhalb des Bundes (14) in der Außenfläche (36) mündet.

## Claims

1. Holder for a tool (11), comprising a longitudinal axis (27), a tapered hollow shaft (16), which has a top opening (17) as well as an interior (31) accessible through the opening (17), for clamping into a tool receiver (21), a collar (14) adjoining the tapered hollow shaft (16), and a retaining shaft (12) adjoining the collar (14) and used to receive the tool (11),
**characterized in that** at least one discharge bore (34, 35) is provided, which extends outwards from the interior (31) and connects the interior (31) to the environment.

2. Holder according to claim 1, **characterized in that** a plurality of discharge bores (34, 35) are provided.

3. Holder according to claim 2, **characterized in that** the plurality of discharge bores (34, 35) are disposed symmetrically relative to the longitudinal axis (27).

4. Holder according to claim 2 or 3, **characterized in that** an even number of discharge bores (34, 335), preferably two discharge bores (34, 35), are provided.

5. Holder according to one of claims 1 to 4, **characterized in that** the or each discharge bore (34, 35) extends from a base (32) of the interior (31) obliquely outwards at an angle to the longitudinal axis (27) which is preferably smaller than 45°.

6. Holder according to claim 5, **characterized in that** the angle is around 30°.

7. Holder according to one of claims 1 to 6,
**characterized in that** the or each discharge bore has a diameter greater than around 5 mm.

8. Holder according to one of claims 1 to 7,
**characterized in that** the or each discharge bore opens in an outer surface (36) of the retaining shaft (12).

9. Holder according to claim 8, **characterized in that** the or each discharge bore opens immediately below the collar (14) in the outer surface (36).

## Revendications

1. Support pour un outil (11) avec un axe longitudinal (27), une tige creuse conique (16), présentant une ouverture supérieure (17) ainsi qu'un volume intérieur (31) accessible à travers l'ouverture (17), destinée à être serrée dans un logement d'outil (21), une collerette (14) se raccordant à la tige creuse conique (16) et une tige de maintien (12) se raccordant à la collerette (14) pour recevoir l'outil (11),
**caractérisé en ce qu'**il est prévu au moins un trou d'écoulement (34, 35) qui s'étend vers l'extérieur depuis le volume intérieur (31) et qui relie le volume intérieur (31) au milieu ambiant.

2. Support selon la revendication 1, **caractérisé en ce que** plusieurs trous d'écoulement (34, 35) sont prévus.

3. Support selon la revendication 2, **caractérisé en ce que** les trous d'écoulement (34, 35) sont disposés symétriquement par rapport à l'axe longitudinal (27).

4. Support selon la revendication 2 ou 3, **caractérisé en ce qu'**il est prévu un nombre pair de trous d'écoulement (34, 35), de préférence deux trous d'écoulement (34, 35).

5. Support selon l'une des revendications 1 à 4, **caractérisé en ce que** le ou chaque trou d'écoulement (34, 35) s'étend obliquement vers l'extérieur, à partir d'un fond (32) du volume intérieur (31), sous un angle, de préférence inférieur à 45°, par rapport à l'axe longitudinal (27).

6. Support selon la revendication 5, **caractérisé en ce que** l'angle est d'environ 30°.

7. Support selon l'une des revendications 1 à 6, **caractérisé en ce que** le ou chaque trou d'écoulement présente un diamètre supérieur à environ 5 mm.

8. Support selon l'une des revendications 1 à 7, **caractérisé en ce que** le ou chaque trou d'écoulement débouche dans une surface extérieure 36 de la tige de maintien 12.

9. Support selon la revendication 8, **caractérisé en ce que** le ou chaque trou d'écoulement débouche dans la surface extérieure (36) directement au-dessous de la collerette (14).
